# EUROPEAN PATENT APPLICATION

(11) **EP 0 867 367 A2**
(43) Date of publication of application: **30.09.1998**
(21) Application number: 98104721.0
(22) Date of filing: 16.03.1998
(51) Int. Cl.: B64D 37/32, A62C 3/06

(54) **Fuel tank inerting system**

(30) Priority: 24.03.1997 US 824655
(71) Applicant: Primex Technologies, Inc., St. Petersburg, FL 33716-3807 (US)
(72) Inventor: Hoskins, Randel L., Bothell, King, Washington 98011 (US)
(74) Representative: Klunker . Schmitt-Nilson . Hirsch

(57) **Abstract**

An apparatus (10) and method for inerting gaseous constituents occupying the ullage space (18) of a fuel tank (10) provide an elevated temperature carbon bed (28) effective to convert oxygen contained within air to carbon dioxide. The oxygen depleted air is delivered to the ullage space (18), displacing the oxygen containing gaseous constituents of the ullage space (18). The apparatus (24) and method are particularly useful to reduce the risk of a fire or an explosion in a partially emptied fuel tank (10) containing a hydrocarbon fuel (14) such as in jet aircraft.

## Description

The invention relates to a method for inerting the gaseous constituents contained within the ullage space of a fuel tank. More particularly, air is contacted with an elevated temperature carbon bed whereby at least some of the oxygen contained within the air is converted to carbon dioxide. The oxygen-depleted gas is then delivered to the ullage space displacing the oxygen containing gaseous constituents.

The ullage space in fuel tanks may constitute a fire hazard or an explosion hazard. Within the ullage space, fuel vapors mix with air and the potential exists that the mixture will be flammable or detonatable. In many vehicles, the flammable/explosive potential is ignored since it is unlikely that an initiating spark will access the ullage space or, the vapor pressure of the fuel is sufficiently high that the gases in the ullage space are not in a flammable or detonatable range.

Jet aircraft use low vapor pressure fuels and occasionally develop flammable or detonatable fuel/air mixtures in the fuel tank ullage space. In military aircraft, an enemy round penetrating the fuel tank ullage space may be the source of an igniting spark. In civilian aircraft, an electrical short circuit or a static electric discharge may provide the spark.

Military aircraft typically have a fuel tank ullage space inerting system based on Halon gas, a carbon base compound containing halogen elements (fluorine, chlorine, bromine and iodine). Widely used Halons include Halon 1301 (CF₃Br) and Halon 1211 (CF₂BrCl). These materials thermally decompose in a fire to producing the bromide anion (Br) that disrupts the chain reactions of the burning process.

Halon fire extinguishing agents are being phased out and will ultimately be banned for environmental reasons. The bromide anion has been linked to depletion of the upper atmosphere ozone layer.

One Halon substitute disclosed in U.S. Patent No. 5,425,886 to Smith, discloses a gas generating inerting system. When ignited, the gas generants produce copious amounts of nitrogen, carbon monoxide, carbon dioxide and water vapor. Water vapor is problematic. The water may condense in the fuel tanks or fuel lines, blocking fuel and contaminating the fuel.

Other inerting systems disperse a mixture of fire suppressing powders on the fire. The powders are dispersed by the effluent of a gas generator as disclosed in commonly owned United States Patent No. 5,423,384 to Galbraith et al. The dispersed powders could contaminate the fuel and this system is more suited for non-fuel tank locations such as a cargo hold.

Still other inerting systems employ containers of compressed nitrogen gas. However, the weight of the storage containers may be several hundred pounds and the gas is stored under high pressure. In a military environment where explosive fragmentation can be reasonably expected, these highly pressurized storage containers are a significant hazard.

Yet another inerting system utilizes a nitrogen separator. The system separates nitrogen out of air and the nitrogen is then returned to the ullage space displacing ambient, oxygen containing, air. Nitrogen separators are heavy. For a C-17 cargo aircraft, having a maximum fuel ullage volume of about 84.9 m³ (3000 cubic feet), the required inert gas generator is reported to weigh about 1816 kg (4000 pounds).

There exists, therefore, a need for a fuel tank inerting system that is both lightweight and does not contaminate the fuel.

It is an object of the invention to provide a method for inerting the ullage space of a fuel tank that does not contaminate the fuel. It is a further object of the invention to provide an apparatus to achieve this method that does not contribute a significant weight penalty to an aircraft.

It is a feature of the invention that oxygen contained within air is converted to carbon dioxide, a stable, non-flammable, non-detonatable gas. This conversion is accomplished by contacting the oxygen with an elevated temperature carbon bed. As another feature of the invention, the resultant carbon dioxide is returned with the remaining constituent gases to the ullage space at a rate sufficiently high to reduce the oxygen concentration in the ullage space to below the flammable limit.

Among the advantages of the invention are that the carbon bed is lightweight and does not contribute a significant weight penalty to the aircraft. Further, reaction of the oxygen with the carbon bed does not generate water vapor, any solids, or any other component likely to contaminate the fuel contained within the fuel tank.

In accordance with the invention, there is provided both an apparatus and a method for inerting the gaseous constituents occupying the ullage space of a fuel tank. The apparatus comprises an intake conduit that extends from an air source to a first end of a carbon bed. The carbon bed is effective to convert at least a portion of the oxygen contained within these gaseous constituents to carbon dioxide. An outlet conduit then extends from a second end of the carbon bed back to the ullage space of the fuel tank.

The method includes the steps of contacting air with carbon that is heated to an elevated temperature whereby at least a portion of the oxygen contained within the air is converted to carbon dioxide, and then returning the oxygen depleted gaseous constituents to the ullage space of the fuel tank.

The above stated objects, features and advantages will become more apparent from the specification and drawings that follow.

Figure 1 shows in cross-sectional representation a fuel tank containing a prior art inerting system.

Figure 2 shows in cross-sectional representation a fuel tank containing the inerting system of the invention.

Figure 3 shows in cross-sectional representation the carbon bed inerting system of the present invention.

Figure 4 shows in cross-sectional representation an alternative carbon bed.

Figure 5 shows in cross-sectional representation a first method for removing gaseous constituents from the fuel tank.

Figure 6 shows in cross-sectional representation a second method for removing gaseous constituents from the fuel tank.

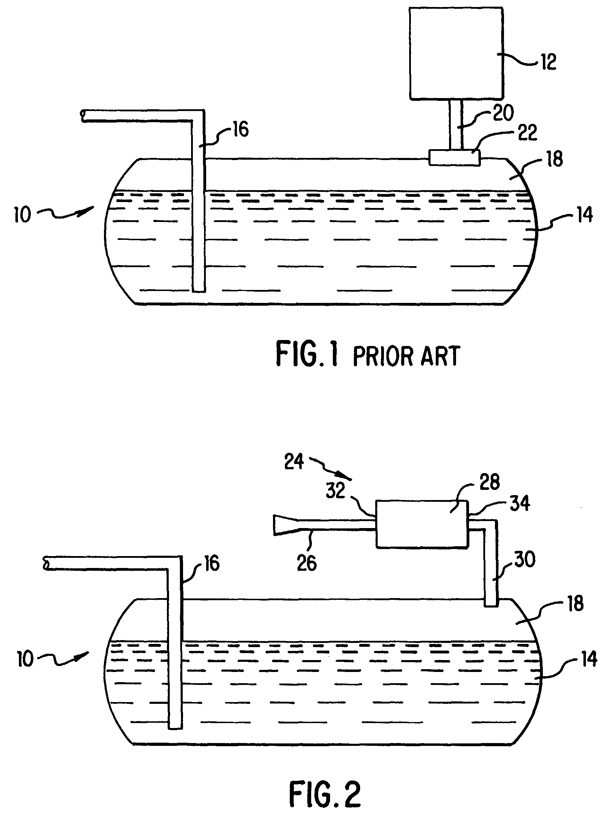

Figure 1 illustrates in cross-sectional representation a fuel tank 10 having an inerting system 12 as known from the prior art. The fuel tank 10 is partially filled with an energetic fuel 14. The fuel 14 is typically hydrocarbon based, and for jet aircraft may be a kerosine based liquid such as JP-4. An outlet pipe 16 withdraws fuel 14 from the fuel tank 10, typically through activation of a fuel pump, and delivers the fuel 14 to the engines. As the fuel 14 is withdrawn, an ullage space 18 increases in volume.

The ullage space 18 contains a mixture of gaseous constituents, including hydrocarbon vapors from the fuel 14 and nitrogen and oxygen from the air. The combination of oxygen and hydrocarbon vapors may constitute a flammable or detonatable mixture in the presence of a spark.

Inerting system 12 may function in any of several different ways. In one alternative, the inerting system 12 transfers a fire-suppressing powder or gas by means of conduit 20 to the ullage space 18. This type of inerting system is typically activated by a sensor 22 located in the ullage space that detects the initiation of a fire.

Alternatively, the inerting system 12 continuously provides a volume inerting gas, such as nitrogen, to displace the oxygen contained within the ullage space, thereby reducing the threat of detonation or explosion.

The first prior art alternative is not satisfactory because water vapor in the gases and solid particulate in the powder contaminate the fuel 14, possibly leading to engine failure. The second alternative is not satisfactory due to a high weight penalty and, when compressed gas is stored in metallic canisters, constituting a source of shrapnel.

The inerting system 24 of the invention, illustrated in Figure 2, solves the problems of the prior art. The fuel tank 10, energetic fuel 14, outlet 16 and ullage space 18 are similar to those described in Figure 1 and function in similar fashion. The inerting system 24 includes an intake conduit 26, a carbon bed 28 and an outlet conduit 30. The intake conduit 26 extends from an air source to a first end 32 of the carbon bed 28. The outlet conduit 30 extends from a second end 34 of the carbon bed 28.

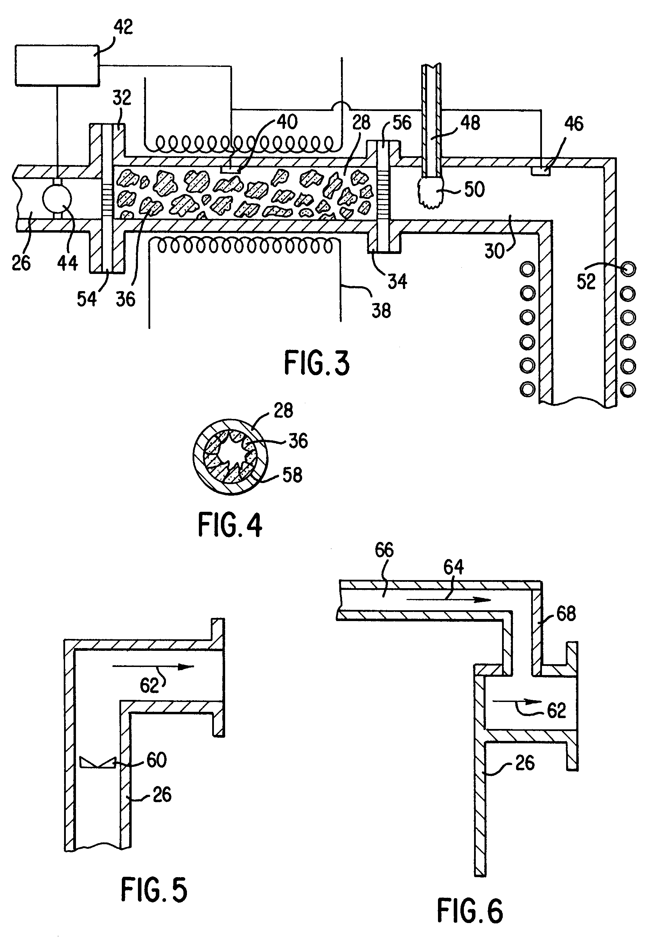

With reference to Figure 3, the carbon bed 28 is effective to convert at least a portion of the oxygen contained within the air to carbon dioxide. The conversion of oxygen to carbon dioxide is achieved by contacting the air with carbon granules 36 that are effective to convert at least a portion of the oxygen to carbon dioxide. The efficiency of the conversion of oxygen to carbon dioxide is enhanced when the carbon granules are at an elevated temperature. Typically, this temperature is at a minimum, about 450°C. Preferably, the temperature is in the range of from about 500°C to about 1100°C.

The carbon granules 36 are preferably heated, such as by resistance coils 38, to initiate the oxygen to carbon dioxide reaction. Once initiated, the heat of reaction is sufficient to maintain the elevated temperature of the carbon granules and it is not necessary to continuously provide a heat input source.

To insure an adequate flow of gaseous constituents through the carbon bed 28, the carbon granules 36 are loosely packed. Typically, the carbon granules fill, by volume, from about 30% to about 70% of the volume of the carbon bed. The remainder of the carbon bed is interconnected open space. A preferred volume fraction of carbon granules in the carbon bed is between 45% and 55%.

It is desirable that the reaction within the carbon bed 28 proceeds from oxygen to carbon dioxide and that the formation of carbon monoxide is minimized. In a first embodiment, an oxygen sensor 40 electronically communicates to a microprocessor 42 the oxygen content within the carbon bed 28. The microprocessor 42 then controls the positioning of valve 44 disposed within the intake conduit 26 to regulate the flow of gaseous constituents to the carbon bed 28.

In a second embodiment, a carbon dioxide sensor 46 (or alternatively, a carbon monoxide sensor) may be positioned in the outlet conduit 30 and in electrical communication with the microprocessor 42.

In a third embodiment, a secondary air combustion chamber 48 provides a flow of air 50 in the effluent from the carbon bed 28 effective to complete combustion of carbon monoxide to carbon dioxide.

The oxygen depleted gas is returned through the outlet conduit 30 to the ullage space and preferably cooled so as to avoid providing an ignition source. Cooling is by any suitable means such as a tubular coil 52 circulating a coolant, such as water, disposed about a portion of the outlet conduit. The oxygen depleted gas is cooled to a temperature of less than the flash point of the fuel. Preferably, the oxygen depleted gas is at a temperature of between 20°C and 200°C when returned to the ullage space.

To avoid the generation of water that could condense in the fuel tank and contaminate the fuel, it is desirable to ensure that the amount of hydrocarbon vapor introduced to the carbon bed 28 is minimized. This is achieved by isolating the intake conduit from the ullage space. Similarly, to avoid contamination of the fuel, the carbon granules 36 are contained in the carbon bed 28. Containment is achieved by first 54 and second 56 filters disposed at first end 32 and second end 34, respectively. The first filter 54 retains coarse granules of carbon and may constitute a stainless steel mesh, having openings on the order of 0.025 mm (0.001 inch). The second filter 56 is also fine to prevent carbon dust from traveling in the effluent gas. Additionally, the second filter must be able to withstand the elevated temperatures of the effluent gas exiting the carbon bed 28. Preferably, the second filter 56 is of the micropore type effective as a dust trap containing openings on the order of 0.025 mm (0.001 inch).

Alternatively, as illustrated in Figure 4, the carbon granules 36 may be bonded to the inside walls 58 of the carbon bed 28.

In either embodiment, the carbon bed 28 is contained within a hollow tube manufactured from a heat resistant material such as stainless steel. Preferably, the intake conduit 26 and outlet conduit 30 are manufactured from a similar material.

To draw the air to the carbon bed, in an embodiment illustrated in Figure 5, a mechanical device, such as a fan 60 creates the necessary pressure differential to maintain flow in the direction of arrow 62.

Alternatively, as illustrated in Figure 6, the air is provided from the engine of a jet or turbo prop. Air is bled from the engine compartment from between the compression portion and the combustion portion. typically, this air is at a pressure of about 1.03 Mpa (150 psi). The advantage of this alternative is that it is not necessary to have a fan or other electrically driven device to move the gaseous constituents from the ullage space, thereby further reducing the possibility of a spark.

The advantages of the invention will be more apparent from the examples that follow.

### HYPOTHETICAL EXAMPLES

For a C-17 transport aircraft, having a maximum fuel ullage volume of about 84.9 m³ (3000 cubic feet), it is estimated that an effective volume of Halon 1301 would weight over 31.3 kg (69 pounds), plus the weight of storage and transfer subsystems. An effective amount of compressed nitrogen gas would weigh 98.5 kg (217 pounds), plus the weight and danger of high pressure gas storage bottles. A nitrogen separator of a effective size is reported to weigh about 1816 kg (4000 pounds).

However, it is calculated that only 3.6 kg (8 pounds) of carbon would be required to inert (reduce the oxygen content by 50%) the 84.9m³ (3000 cubic foot) tank ullage space. Based on a carbon bed having 50%, by volume packing, the reactor would occupy less than 3.7 x 10⁻³ m³ (0.13 cubic feet).

For a fighter-type aircraft that may have a fuel volume of only about 2.83 m³ (100 cubic feet), only about 0.14 kg (0.3 pounds) of carbon would be required and the reactor volume would be less than 1.4 x 10⁻⁴ m³ (0.005 cubic feet).

While described above in reference to aircraft applications, the inerting system of the invention is suitable for any application that requires a low to no oxygen content inerting gas, such as ocean-going fuel tankers.

It is apparent that there has been provided in accordance with this invention an apparatus and method for inerting the ullage space of a fuel tank that fully satisfies the objects, means and advantages set forth hereinbefore. While the invention has been described in combination with specific embodiments thereof, it is evident that many alternatives, modifications and variations will be apparent to those skilled in the art in light of the foregoing description. Accordingly, it is intended to embrace all such alternatives, modifications and variations as fall within the spirit and broad scope of the claims.

## Claims

1. An apparatus (24) for inerting gaseous constituents occupying the ullage space (18) of a fuel tank (10), characterized by:
an intake conduit (26) extending from an air source to a first end (32) of a carbon bed (28);
said carbon bed (28) being effective to convert at least a portion of oxygen contained within said gaseous constituents to carbon dioxide; and
an outlet conduit (30) extending from a second end (34) of said carbon bed (28) to the ullage space (18) of said fuel tank (10).

2. The apparatus (24) of claim 1 characterized in that said carbon bed (28) is from 30% to 70%, by volume, filled with carbon granules 36.

3. The apparatus (24) of claim 1 or 2 characterized in that said carbon bed (28) is at a temperature of from 500°C to 1100°C.

4. The apparatus of any one of claims 1 to 3 further characterized in that a secondary air combustion chamber (48) is disposed in said outlet conduit (30) and is effective to convert carbon monoxide to carbon dioxide.

5. The apparatus of any one of claims 1 to 4 characterized in that said gaseous constituents are drawn from said air source by a mechanically created pressure differential (60).

6. The apparatus of any one of claims 1 to 5 characterized in that said gaseous constituents are drawn from an aircraft engine chamber (66).

7. A method for inerting the gaseous constituents occupying the ullage space (18) of a fuel tank (10), characterized by the steps of:
contacting air with carbon that is heated to an elevated temperature whereby at least a portion of oxygen contained within said air is converted to carbon dioxide; and
delivering said oxygen depleted air to the ullage space (18) of said fuel tank (10).

8. The method of claim 7 characterized in that said air is obtained by mechanically (60) creating a pressure differential in an intake conduit (26) disposed between an air source and said carbon (36).

9. The method of claim 7 or 8 characterized in that said air is obtained from a pressurized aircraft engine compartment.

10. The method of any one of claims 7 to 9 characterized in that said carbon (36) is heated (38) to a temperature of from 500°C to 1100°C.

11. The method of any one of claims 7-10 further characterized in that the step of combusting (50) said oxygen depleted air to convert carbon monoxide to carbon dioxide is included prior to delivery to said ullage space (18).

12. The method of any of claims 7-11 further characterized in that including cooling of said oxygen depleted gaseous constituent to a temperature of less than the flash point of a fuel (14) contained within said fuel tank (10) is included prior to return of said oxygen depleted gaseous constituents to said ullage space (18).
